# EUROPEAN PATENT APPLICATION

(11) **EP 4 451 393 A1**
(43) Date of publication of application: **23.10.2024**
(21) Application number: 22907481.0
(22) Date of filing: 14.12.2022
(51) Int. Cl.: H01M 4/86, B01J 23/42, B01J 35/08, B01J 35/10, C01B 32/00, H01M 4/90, H01M 4/92, H01M 8/10, H01M 8/1004

(54) **IONIC LIQUID-IMPREGNATED INORGANIC MATERIAL-COATED CATALYST PARTICLES, MEMBRANE ELECTRODE ASSEMBLY FOR FUEL CELLS, AND FUEL CELL**

(30) Priority: 15.12.2021 JP 2021203467; 26.07.2022 JP 2022118922
(71) Applicant: Toppan Holdings Inc., Tokyo 110-0016 (JP)
(72) Inventor: KURIHARA, Hitoshi, Tokyo 110-0016 (JP)
(74) Representative: Hoffmann Eitle
(86) International application number: PCT/JP2022/046026
(87) International publication number: WO 2023/112958

(57) **Abstract**

Ionic liquid-impregnated inorganic material-coated catalyst particles 1 comprise catalyst particles 3 each comprising a conductive carrier 2 and metal particles 3 supported on the conductive carrier 2, wherein at least part of the surface of the metal particles 3 is coated with an inorganic material 4, at least part of the remaining surface of the metal particles 3 coated with the inorganic material 4 is in contact with an ionic liquid 5, and at least one of the following A and B is satisfied: Requirement A: the conductive carrier is carbon, and the peak intensity ratio of G-band and D-band (G/D ratio) determined by Raman spectroscopy is 1.6 or more and 2.2 or less at a laser wavelength of 532 nm; and Requirement B: the conductive carrier has a pore volume in a mesopore region of 0.18 cm³/g or more as determined by a BJH method, and a peak top pore diameter in a pore distribution curve within the range of 2.6 nm or more and 2.8 nm or less as determined by a BJH method.

## Description

### [Technical Field]

The present invention relates to ionic liquid-impregnated inorganic material-coated catalyst particles, a membrane electrode assembly comprising the ionic liquid-impregnated inorganic material-coated catalyst particles, and a fuel cell comprising the membrane electrode assembly.

### [Background Art]

As solid polymer fuel cells, there are known fuel cells comprising an electrolyte layer formed from an ion exchange resin, a fuel-side electrode (anode) to which fuel is supplied, and an oxygen-side electrode (cathode) to which oxygen is supplied.

In such a fuel cell, fuel is supplied to the anode and air is supplied to the cathode, thereby generating an electromotive force to generate electricity.

As a cathode catalyst, for example, a platinum-supported carbon catalyst in which platinum particles are supported on carbon has been proposed; however, this platinum-supported carbon catalyst has a problem in durability. Specifically, there is a problem that the platinum particles supported on carbon dissolve into the electrolyte layer, leading to a decrease in fuel cell performance.

PTL 1 has reported an electrode material in which a conductive carrier and metal particles arranged on the conductive carrier are encapsulated (coated) with a porous inorganic material, which can prevent the elution of the metal particles and suppress performance decrease of the fuel cell.

However, although the electrode material disclosed in PTL 1 is effective in suppressing the elution of the metal particles, the porous inorganic material covers the surface of the metal particles, leading to poor (reduced) contact between the metal particles and an ionomer. As a result, the electrode material disclosed in PTL 1 had the problem of increased resistance and decreased IV characteristics.

Moreover, since the porous inorganic material disclosed in PTL 1 generally has high hydrophilicity, there is the problem that the surface of the metal particles that form the electrode material disclosed in PTL 1 is covered with water, which consequently reduces drainage and increases the resistance of the electrode material.

In addition, NPL 1 has reported that in order to suppress the reaction between Pt particles and water, catalyst particles are coated with an ionic liquid with low affinity for water to thereby improve oxygen reduction activity.

However, with the technique disclosed in NPL 1, it is difficult to retain the ionic liquid, and the ionic liquid easily leaks. For this reason, the technique disclosed in NPL 1 has issues in terms of durability.

Further, even if amorphous carbon, which is carbon with low crystallinity such as porous carbon, is used as a conductive carrier with the intention of preventing the leakage of the ionic liquid, the amorphous carbon is easily oxidized and lost in durability tests. Thus, issues in terms of durability remain.

The present inventor found that a carbon carrier with high crystallinity is used as a conductive carrier, for catalyst particles in which metal particles are supported at a high density on the carbon carrier, at least part of the metal particles is encapsulated (coated) with an inorganic material, and the inorganic material and the carbon carrier are impregnated with an ionic liquid, whereby oxygen reduction activity is improved, higher IV characteristics are obtained, the effect of suppressing the elution of the metal particles is increased, and excellent durability is obtained, compared to the catalyst particles included in a porous inorganic material or the catalyst particles coated with an ionic liquid according to the prior art mentioned above. Thus, the present invention has been accomplished.

### [Citation List]

### [Patent Literature]

PTL 1: JP 2008-4541 A

### [Non-Patent Literature]

NPL 1: ACS Catalysis, 2018, 8, 8244-8254.

### [Summary of the Invention]

### [Technical Problem]

The present invention is focused on the above point, and an object thereof is to provide ionic liquid-impregnated inorganic material-coated catalyst particles that have excellent oxygen reduction activity to thereby achieve high IV characteristics and/or excellent durability, a fuel cell membrane electrode assembly, and a fuel cell.

### [Solution to Problem]

[1] Ionic liquid-impregnated inorganic material-coated catalyst particles comprising catalyst particles each comprising a conductive carrier and metal particles supported on the conductive carrier, wherein part of the surface of the metal particles is coated with an inorganic material, at least part of the remaining surface of the metal particles coated with the inorganic material is in contact with an ionic liquid, and at least one of the following A and B is satisfied:
   Requirement A: the conductive carrier is carbon, and the peak intensity ratio of G-band and D-band (G/D ratio) determined by Raman spectroscopy is 1.6 or more and 2.2 or less at a laser wavelength of 532 nm; and
   Requirement B: the conductive carrier has a pore volume in a mesopore region of 0.18 cm³/g or more as determined by a BJH method, and a peak top pore diameter in a pore distribution curve within the range of 2.6 nm or more and 2.8 nm or less as determined by a BJH method.
[2] The ionic liquid-impregnated inorganic material-coated catalyst particles according to [1], wherein the metal particles are platinum particles and have a crystallite size (1,1,1) of 8 nm or less as measured by an XRD method.
[3] The ionic liquid-impregnated inorganic material-coated catalyst particles according to [1] or [2], wherein the inorganic material is silica.
[4] The ionic liquid-impregnated inorganic material-coated catalyst particles according to any one of [1] to [3], wherein the ionic liquid comprises an imidazolium salt.
[5] The ionic liquid-impregnated inorganic material-coated catalyst particles according to any one of [1] to [4], wherein the ionic liquid comprises 1-alkyl-3-methylimidazolium bis(trifluoromethanesulfonyl)imide.
[6] The ionic liquid-impregnated inorganic material-coated catalyst particles according to any one of [1] to [5], wherein the ionic liquid comprises at least one selected from the group consisting of
   1-butyl-3-methylimidazolium bis(trifluoromethanesulfonyl)imide,
   1-hexyl-3-methylimidazolium bis(trifluoromethanesulfonyl)imide, and
   1-ethyl-3-methylimidazolium bis(trifluoromethanesulfonyl)imide.
[7] The ionic liquid-impregnated inorganic material-coated catalyst particles according to any one of [1] to [6], wherein the amount of the ionic liquid impregnated in the ionic liquid-impregnated inorganic material-coated catalyst particles is 50 vol% or more and 90 vol% or less of the mesopore volume of the catalyst particles.
[8] A fuel cell membrane electrode assembly characterized by comprising a catalyst layer comprising the ionic liquid-impregnated inorganic material-coated catalyst particles according to any one of [1] to [7].
[9] The fuel cell membrane electrode assembly according to [8], characterized in that the catalyst layer further comprises a fibrous material.
[10] A fuel cell characterized by comprising the ionic liquid-impregnated inorganic material-coated catalyst particles according to any one of [1] to [9].

### [Advantageous Effects of the Invention]

According to one embodiment of the present invention, it is possible to provide ionic liquid-impregnated inorganic material-coated catalyst particles having excellent oxygen reduction activity to thereby achieve high IV characteristics and/or excellent durability, a fuel cell membrane electrode assembly, and a fuel cell. More specifically, according to one embodiment of the present invention, by using carbon with pores or high crystallinity as a conductive carrier, an ionic liquid can be stably retained in catalyst particles. As a result, proton transfer to metal particles encapsulated (coated) with an inorganic material can occur through the ionic liquid, thereby increasing oxygen reduction activity and achieving high IV characteristics. Further, due to the high crystallinity of carbon, the oxidation loss of carbon in durability tests can be reduced, whereby it is possible to provide a fuel cell cathode catalyst with excellent durability, a fuel cell membrane electrode assembly, and a fuel cell.

### [Brief Description of the Drawings]

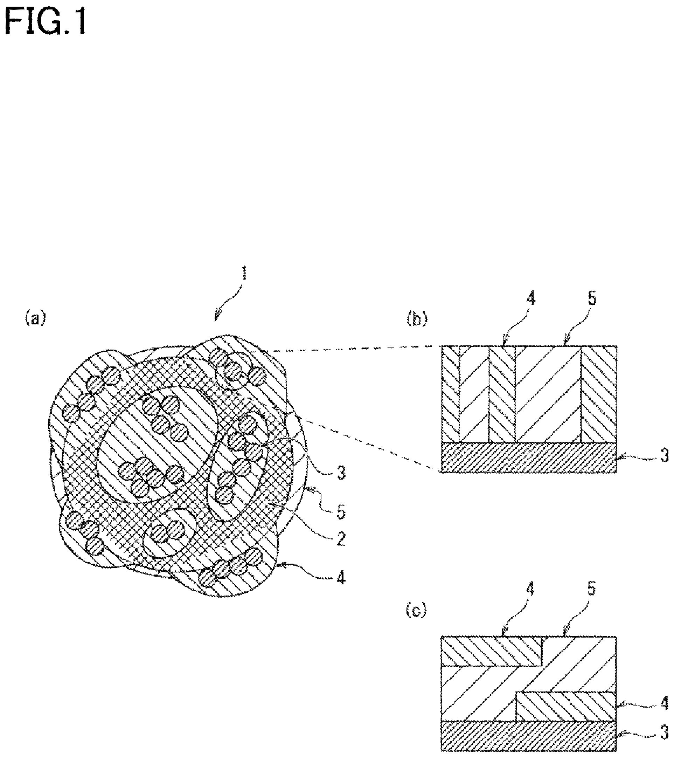

[Fig. 1] Explanatory diagrams schematically showing the structure of ionic liquid-impregnated inorganic material-coated catalyst particles according to an embodiment of the present invention. (a) is an explanatory diagram schematically showing the entire ionic liquid-impregnated inorganic material-coated catalyst particles, (b) is an explanatory diagram schematically showing a cross section of the main part thereof, and (c) is an explanatory diagram schematically showing a cross section of the main part when using silica obtained by hydrolysis or dehydration condensation of either tetraethoxysilane or triethoxymethylsilane as an inorganic material.
[Fig. 2] An explanatory diagram schematically showing the IV curves of ionic liquid-impregnated silica-coated Pt-supported carbon, ionic liquid-impregnated Pt-supported carbon, silica-coated Pt-supported carbon, and Pt-supported carbon according to examples of the present invention.
[Fig. 3] The results of ECSA of ionic liquid-impregnated silica-coated Pt-supported carbon and ionic liquid-impregnated Pt-supported carbon according to the example and comparative example of the present invention.
[Fig. 4] TEM-EDS images of the ionic liquid-impregnated silica-coated catalyst of Example B2, showing C, Si, and Pt in this order.

### [Description of the Embodiments]

Hereinafter, embodiments of the present invention will be described with reference to the drawings.

### <Entire structure of ionic liquid-impregnated inorganic material-coated catalyst particles>

Fig. 1 shows explanatory diagrams schematically showing the structure of ionic liquid-impregnated inorganic material-coated catalyst particles 1 according to an embodiment of the present invention. Fig. 1 (a) is an explanatory diagram schematically showing the entire ionic liquid-impregnated inorganic material-coated catalyst particles 1, Fig. 1 (b) is an explanatory diagram schematically showing an enlarged cross section of the main part of the ionic liquid-impregnated inorganic material-coated catalyst particles 1, and Fig. 1 (c) is an explanatory diagram schematically showing an enlarged cross section of the main part of the ionic liquid-impregnated inorganic material-coated catalyst particles 1 when using silica obtained by hydrolysis or dehydration condensation of either tetraethoxysilane or triethoxymethylsilane as an inorganic material.

As shown in Fig. 1 (a), the ionic liquid-impregnated inorganic material-coated catalyst particles 1 according to the present embodiment are catalyst particles each containing a conductive carrier 2 and a plurality of metal particles 3 supported on the conductive carrier 2. Part of the surface of the metal particles 3 encapsulates, in other words, is coated with, an inorganic material 4. Further, at least part of the remaining surface of the metal particles 3 is also in contact with an ionic liquid 5. That is, part of the surface of the metal particles 3 is encapsulated (coated) with the inorganic material 4, and at least part of the remaining surface of the metal particles 3 encapsulated (coated) with the inorganic material 4 is coated with the ionic liquid 5, without being coated with the inorganic material 4. Each of the above configurations will be described in detail below.

### (Conductive carrier)

The conductive carrier 2 preferably satisfies the following requirement A.

(Requirement A): carbon with a peak intensity ratio of G-band and D-band (G/D ratio) of 1.6 or more as determined by Raman spectroscopy.

Further, the conductive carrier 2 is preferably carbon with a peak intensity ratio (G/D ratio) of 1.8 or more. In the present embodiment, the wavelength of the laser light used in Raman spectroscopy was set at 532 nm. The G-band determined by Raman spectroscopy in the present embodiment means the Raman peak located at around 1580 cm⁻¹. The D-band determined by Raman spectroscopy means the Raman peak located at around 1360 cm⁻¹.

Since carbon with a peak intensity ratio (G/D ratio) of 1.6 or more has higher crystallinity than carbon used in the prior art, the loss due to oxidation of the carbon carrier in the durability test of the ionic liquid-impregnated inorganic material-coated catalyst particles 1 can be reduced. As a result, the durability of the ionic liquid-impregnated inorganic material-coated catalyst particles 1 can be improved.

When the peak intensity ratio (G/D ratio) is less than 1.6, the specific surface area increases. Accordingly, the amount of metal particles (e.g., Pt particles) that can be supported on the carbon carrier increases compared to when the peak intensity ratio (G/D ratio) is 1.6 or more; however, compared to when the peak intensity ratio (G/D ratio) is 1.6 or more, the crystallinity of the carbon carrier is reduced (i.e., becoming amorphous carbon). As a result, the durability of the ionic liquid-impregnated inorganic material-coated catalyst particles 1 is reduced compared to when the peak intensity ratio (G/D ratio) is 1.6 or more.

In the present embodiment, the upper limit value of the peak intensity ratio (G/D ratio) is 2.2 or less. The upper limit value is preferably 2.0 or less. When the upper limit value is 2.2 or less, it is easy to obtain a carbon carrier that has a carbon pore volume, described later, of 0.18 cm³/g or more and a pore diameter of 2.6 nm or more and 2.8 nm or less, which is preferable.

The conductive carrier 2 also preferably satisfies the following requirement B.

Requirement B: the conductive carrier 2 has a pore volume in a mesopore region of 0.18 cm³/g or more as determined by a BJH method, and a peak top pore diameter in a pore distribution curve within the range of 2.6 nm or more and 2.8 nm or less as determined by a BJH method. Further, the conductive carrier 2 preferably has a pore volume in the mesopore region of 0.20 cm³/g or more as determined by the BJH method, and a peak top pore diameter in the pore distribution curve within the range of 2.65 nm or more and 2.75 nm or less as determined by the BJH method.

When the conductive carrier 2 has a pore volume in the mesopore region of 0.18 cm³/g or more, a sufficient amount of the ionic liquid can be retailed. The conductive carrier 2 more preferably has a pore volume in the mesopore region of 0.30 cm³/g or more.

When the conductive carrier 2 has a peak top pore diameter in the pore distribution curve of less than 2.6 nm, the ionic liquid 5 is less likely to flow into (less likely to impregnate into) the conductive carrier 2. Therefore, oxygen reduction activity cannot sufficiently be obtained, and it is difficult to obtain a sufficient voltage.

When the conductive carrier 2 has a peak top pore diameter in the pore distribution curve of more than 2.8 nm, the ionic liquid 5 easily leaks from the inside of the conductive carrier 2. Therefore, oxygen reduction activity cannot sufficiently be obtained, and it is difficult to obtain a sufficient voltage.

In the present embodiment, "the pore volume in the mesopore region" means the total pore volume obtained from pore distribution from 2 nm to 100 nm after BJH analysis of measurement results by a nitrogen adsorption BET multipoint method. In the present embodiment, "peak top pore diameter" means a pore diameter in the peak from 2 nm to 100 nm of a pore distribution curve obtained by BJH analysis.

### (Inorganic material)

The inorganic material 4 mainly encapsulates (coats) the metal particles 3, but does not completely encapsulate (coat) the surface of the catalyst particles 1 having the conductive carrier 2 and the metal particles 3, and part of the surface of the conductive carrier 2 is exposed without being coated with the inorganic material 4. Therefore, it is possible to ensure electronic conduction in the catalyst particles 1 through part of the surface of the conductive carrier 2. That is, as shown in Figs. 1 (a) to (c), the catalyst particles 1 have a form in which part of the surface of the conductive carrier 2 and part of the surface the metal particles 3 are encapsulated (coated) with the inorganic material 4.

In the present embodiment, since the inorganic material 4 encapsulates (coats) part of the surface of the metal particles 3, elution of the metal particles 3 can be suppressed.

In the catalyst particles 1, at least some of the multiple metal particles 3 supported on the conductive carrier 2 may be encapsulated (coated) with the inorganic material 4.

The inorganic material 4 is preferably a material containing one or more components among silica (SiO₂), zirconia (ZrO₂), and titania (TiO₂).

The inorganic material 4 is more preferably silica, and particularly preferably silica obtained by hydrolysis or dehydration condensation of either tetraethoxysilane or triethoxymethylsilane. When the inorganic material 4 is silica obtained by hydrolysis or dehydration condensation of tetraethoxysilane or triethoxymethylsilane, the inorganic material 4 tends to have a laminated structure in which silica films are stacked together, as shown in Fig. 1 (c); thus, the ionic liquid 5 is more effectively retained within the inorganic material 4, and elution of the ionic liquid 5 can be suppressed. The film thickness of the above silica film is preferably within the range of 1 nm or more and 100 nm or less, more preferably within the range of 10 nm or more and 50 nm or less, and even more preferably within the range of 20 nm or more and 40 nm or less. When the film thickness of the silica film is less than 1 nm, it is difficult to form the film. If the film thickness of the silica film exceeds 100 nm, the silica film is easily peeled off due to shear stress in the dispersion process during liquid preparation.

The composition of silica using tetraethoxysilane as a material is Si(O_{1/2})₄. Further, the composition of silica using triethoxymethylsilane as a material is Si(O_{1/2})₃Me, and its form is porous (low crystalline silica).

### (Ionic liquid)

The metal particles 3, on parts of the surface not coated with the inorganic material 4, are in contact with the ionic liquid 5. Therefore, the increase in ionic resistance due to partial encapsulation (coating) of the metal particles 3 with the inorganic material 4 can be suppressed.

The ionic liquid 5 is preferably an imidazolium salt. The imidazolium salt is a salt of a cation having an imidazole ring structure with a counter anion. An example of the cation is shown below. R and R' are independently -CH₃, -C₂H₅, -C₃H₇, -C₄H₉, -C₆H₁₃, or -CH₂-CH=CH₂.

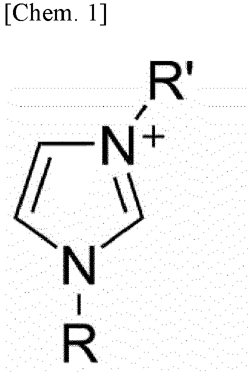

Examples of the counter anion include Cl⁻, Br⁻, I⁻, BF₄⁻, PF₆⁻, FSI ((FSO₂)₂N⁻), and TFSI ((CF₃SO₂)₂N⁻).

Of these, the ionic liquid 5 preferably contains 1-alkyl-3-methylimidazolium bis(trifluoromethanesulfonyl)imide. As the alkyl moiety, methyl, ethyl, butyl, pentyl, heptyl, hexyl, octyl, nonyl, decyl, or the like is used. The alkyl moiety is particularly preferably an ethyl group, a butyl group, or a hexyl group. That is, the ionic liquid 5 is more preferably at least one selected from 1-butyl-3-methylimidazolium bis(trifluoromethanesulfonyl)imide, 1-ethyl-3-methylimidazolium bis(trifluoromethanesulfonyl)imide, and 1-hexyl-3-methylimidazolium bis(trifluoromethanesulfonyl)imide.

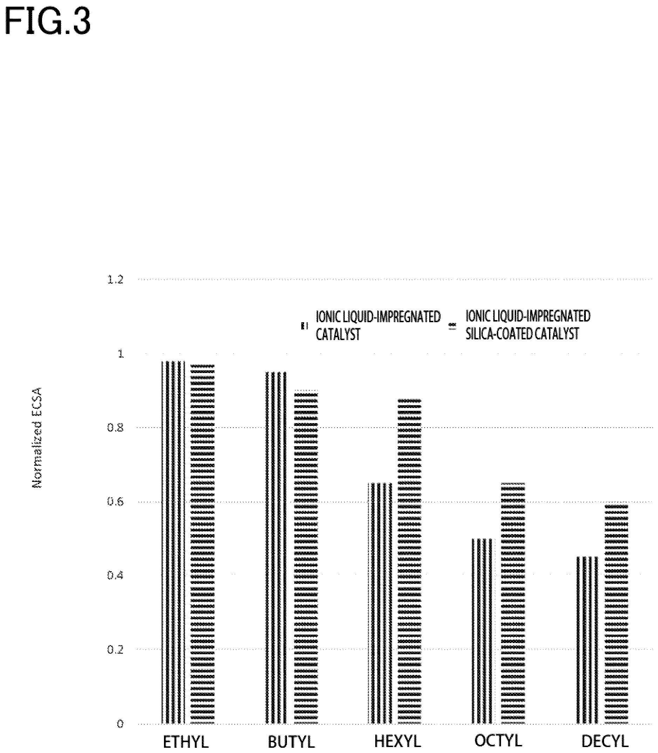

When the alkyl moiety has a longer alkyl chain, as shown in Fig. 3, the active sites on the surface of the metal particles decrease, and ECSA is reduced.

The ionic liquid 5 may be composed only of 1-butyl-3-methylimidazolium bis(trifluoromethanesulfonyl)imide, but may contain, in addition to 1-butyl-3-methylimidazolium bis(trifluoromethanesulfonyl)imide, other 1-alkyl-3-methylimidazolium bis(trifluoromethanesulfonyl)imides. When a plurality of 1-alkyl-3-methylimidazolium bis(trifluoromethanesulfonyl)imides are contained as the ionic liquid 5, the content of the 1-butyl-3-methylimidazolium bis(trifluoromethanesulfonyl)imide may be 50% or more of the entire mass of the ionic liquid 5.

A large amount of the ionic liquid 5 is adsorbed (impregnated) into the entire ionic liquid-impregnated inorganic material-coated catalyst particles 1, particularly inside the pores of the conductive carrier 2. The amount of the ionic liquid 5 filled (the amount of the ionic liquid 5 impregnated) may be equivalent to 50 vol% or more and 100 vol% or less of the mesopore volume of the catalyst particles composed of the conductive carrier and the metal particles. More specifically, the content of the ionic liquid 5 in the catalyst particles is preferably within the range of 50 vol% or more and 100 vol% or less of the mesopore volume of the catalyst particles, more preferably within the range 70 vol% or more and 95 vol% or less, and most preferably within the range 85 vol% or more and 90 vol% or less. The mesopore volume of the catalyst particles can be determined, for example, by a low-temperature nitrogen adsorption method. In the present embodiment, the total pore volume from 2 nm to 100 nm was used as the mesopore volume (the pore volume in the mesopore region). If the amount of the ionic liquid 5 impregnated is less than 50 vol% of the mesopore volume of the catalyst particles, a sufficient effect cannot be obtained regarding oxygen reduction activity by the ionic liquid 5. If the amount of the ionic liquid 5 impregnated is more than 100 vol% or 90 vol% of the mesopore volume of the catalyst particles, the ionic liquid 5 cannot be stably retained by the ionic liquid-impregnated inorganic material-coated catalyst particles 1, and part of the ionic liquid 5 may flow out in the production process of the ionic liquid-impregnated inorganic material-coated catalyst particles 1, in the liquid preparation process, or during power generation of a fuel cell incorporated with an electrode using the ionic liquid-impregnated inorganic material-coated catalyst particles 1. If a large amount of the ionic liquid 5 is impregnated, oxygen is less likely to permeate from the inside of the ionic liquid layer to the surface of the metal particles, which may increase the resistance and reduce IV performance.

### (Metal particles)

The metal particles 3 used in the ionic liquid-impregnated inorganic material-coated catalyst particles 1 preferably contain one or more components among Pt, Rh, Pd, Au, and Ir. For example, Pt alone, alloy particles of Pt and Co, or core-shell particles in which a Pd core is coated with Pt particles may be used.

Further, the metal particles 3 are preferably Pt particles with a crystallite size (1,1,1) of 8 nm or less, and more preferably 5 nm or less, as measured by the XRD method. The (1,1,1) above indicates the Miller index. In the case of Pt particles with a crystallite size (1,1,1) of 8 nm or less, catalytic activity is high and high voltage can be obtained. Further, in the case of Pt particles with a crystallite size (1,1,1) of 3 nm or more and 4 nm or less, high catalytic activity can be reliably obtained.

In the present embodiment, the lower limit value of the crystallite size (1,1,1) is not particularly limited, but is preferably 3 nm or more. When the crystallite size (1,1,1) is 3 nm or more, catalytic activity can be reliably obtained.

In the case of Pt particles with a crystallite size (1,1,1) of more than 8 nm, the ratio of the surface area of the Pt particles to the mass of the Pt particles (surface area of Pt particles/mass of Pt particles) is smaller than that of Pt particles with a crystallite size (1,1,1) of 8 nm or less. As a result, the ratio of the catalytic ability of the Pt particles to the mass of the Pt particles (catalytic ability of Pt particles/mass of Pt particles) is smaller than that of Pt particles with a crystallite size (1,1,1) of 8 nm or less. Therefore, Pt particles with a crystallite size (1,1,1) of more than 8 nm are less likely to achieve high IV characteristics compared to Pt particles with a crystallite size (1,1,1) of 8 nm or less.

The definitions in the present specification are added below.
Catalyst particles: conductive carrier + metal particles
Pt-supported carbon: carbon + Pt
Ionic liquid-impregnated catalyst: conductive carrier + metal particles + ionic liquid
Ionic liquid-impregnated Pt-supported carbon: carbon + Pt + ionic liquid
Ionic liquid-impregnated inorganic material-coated catalyst: conductive carrier + metal particles + ionic liquid + inorganic material
Ionic liquid-impregnated silica-coated catalyst: conductive carrier + metal particles + ionic liquid + silica
Ionic liquid-impregnated silica-coated Pt-supported carbon: carbon + Pt + ionic liquid + silica

<Fuel cell membrane electrode assembly>

The fuel cell membrane electrode assembly according to the present embodiment comprises a catalyst layer (electrode catalyst layer) containing the ionic liquid-impregnated inorganic material-coated catalyst particles 1 described above. The fuel cell membrane electrode assembly according to the present embodiment comprises, for example, a polymer electrolyte membrane and a pair of catalyst layers containing the ionic liquid-impregnated inorganic material-coated catalyst particles 1 and vertically holding the polymer electrolyte membrane. The catalyst layer on the anode side may not contain the ionic liquid-impregnated inorganic material-coated catalyst particles 1, and only the catalyst layer on the cathode side may contain the ionic liquid-impregnated inorganic material-coated catalyst particles 1.

The catalyst layer may further contain a fibrous material in addition to the ionic liquid-impregnated inorganic material-coated catalyst particles 1. The fibrous material is preferably an electronically conductive fibrous material, and more preferably a proton conductive fibrous material.

The content of the fibrous material in the catalyst layer is preferably within the range of 0.1 parts by mass or more and 45 parts by mass or less, more preferably within the range of 0.1 parts by mass or more and 10 parts by mass or less, and even more preferably within the range of 0.1 parts by mass or more and 5 parts by mass or less, based on 100 parts by mass of the entire mass of the catalyst layer. When the content of the fibrous material in the catalyst layer is within the above numerical range, more excellent proton conductivity can be imparted to the catalyst layer.

### <Fuel cell>

The fuel cell according to the present embodiment comprises the ionic liquid-impregnated inorganic material-coated catalyst particles described above. The fuel cell according to the present embodiment comprises, for example, a pair of gas diffusion layers, and the gas diffusion layers are arranged to face the respective catalyst layers of the membrane electrode assembly described above. Each gas diffusion layer and each catalyst layer form a cathode (positive electrode) and an anode (negative electrode).

### (Effects of the present embodiment)

The ionic liquid-impregnated inorganic material-coated catalyst particles 1 according to the present embodiment exhibit the following effects.
(1) The ionic liquid-impregnated inorganic material-coated catalyst particles 1 according to the present embodiment each comprise a conductive carrier 2 and metal particles 3 supported on the conductive carrier 2, part of the surface the metal particles 3 is encapsulated (coated) with an inorganic material 4, and at least part of the remaining surface of the metal particles coated with the inorganic material 4 is in contact with an ionic liquid.
   With this configuration, the decrease in active sites on the surface of the metal particles is suppressed by the ionic liquid, and high IV characteristics can be obtained. In addition, durability can be improved by the effect of suppressing the elution of the metal particles by the inorganic material.
(2) In one embodiment, the conductive carrier 2 is carbon, and the peak intensity ratio of G-band and D-band (G/D ratio) determined by Raman spectroscopy at a laser wavelength of 532 nm is 1.6 or more and 2.2 or less.
   With such a configuration, the conductive carrier 2 has high graphitization (high crystallinity) and can suppress carbon consumption during the durability test. Therefore, the ionic liquid 5 impregnated into the ionic liquid-impregnated inorganic material-coated catalyst particles 1 is stably retained even after the durability test, and the decrease in power generation performance can be suppressed.
(3) In one embodiment, the conductive carrier 2 has a pore volume in the mesopore region of 0.18 cm³/g or more as determined by the BJH method and a peak top pore diameter in the pore distribution curve within the range of 2.6 nm or more and 2.8 nm or less as determined by the BJH method.
   With such a configuration, the conductive carrier 2 has high graphitization (high crystallinity) and can suppress carbon consumption during the durability test. Therefore, the ionic liquid 5 impregnated into the catalyst particles 1 is stably retained even after the durability test, and the decrease in power generation performance can be suppressed. In addition, with such a configuration, the conductive carrier 2 has high impregnability with the ionic liquid 5, and excellent oxygen reduction activity can be obtained. Therefore, the ionic liquid 5 impregnated into the ionic liquid-impregnated inorganic material-coated catalyst particles 1 is stably retained even after the durability test, and the decrease in power generation performance can be suppressed.
(4) In one embodiment, the conductive carrier 2 in the ionic liquid-impregnated inorganic material-coated catalyst particles 1 according to the present embodiment preferably has a pore volume in the mesopore region of 0.18 cm³/g or more as determined by the BJH method and a peak top pore diameter in the pore distribution curve within the range of 2.6 nm or more and 2.8 nm or less as determined by the BJH method.

With such a configuration, the ionic liquid 5 can be impregnated into the ionic liquid-impregnated inorganic material-coated catalyst particles 1 and can be stably retained.

If the pore volume is less than 0.18 cm³/g, the amount of the ionic liquid that can be retained is reduced. If the peak top pore diameter in the pore distribution curve is smaller than 2.6 nm, the ionic liquid 5 is less likely to impregnate, and if it is larger than 2.8 nm, part of the ionic liquid 5 comes out in the production of the ionic liquid-impregnated inorganic material-coated catalyst particles 1.

(5) In one embodiment, the metal particles 3 in the ionic liquid-impregnated inorganic material-coated catalyst particles 1 according to the present embodiment are preferably platinum particles, and have a crystallite size (1,1,1) of 8 nm or less as determined by the XRD method. With such a configuration, the metal particles 3 have high oxygen reduction activity, and high power generation characteristics can be achieved.

(6) The inorganic material 4 in the ionic liquid-impregnated inorganic material-coated catalyst particles 1 according to the present embodiment is preferably silica, and this silica is preferably formed from either tetraethoxysilane or triethoxymethylsilane. With such a configuration, the ionic liquid-impregnated inorganic material-coated catalyst particles 1 can achieve high power generation characteristics.

(7) The ionic liquid in the ionic liquid-impregnated inorganic material-coated catalyst particles 1 according to the present embodiment is preferably an imidazolium salt, such as 1-alkyl-3-methylimidazolium bis(trifluoromethanesulfonyl)imide.

With such an ionic liquid 5, while reducing the elution of the metal particles 3 contained in the ionic liquid-impregnated inorganic material-coated catalyst particles 1, protons and oxygen can move smoothly to the metal particles 3, thereby exhibiting excellent oxygen reduction activity.

(8) The ionic liquid in the ionic liquid-impregnated inorganic material-coated catalyst particles 1 according to the present embodiment is preferably at least one selected from the group consisting of 1-butyl-3-methylimidazolium bis(trifluoromethanesulfonyl)imide, 1-hexyl-3-methylimidazolium bis(trifluoromethanesulfonyl)imide, and 1-ethyl-3-methylimidazolium bis(trifluoromethanesulfonyl)imide.

With such an ionic liquid 5, while reducing the elution of the metal particles 3 contained in the ionic liquid-impregnated inorganic material-coated catalyst particles 1, protons and oxygen can move smoothly to the metal particles 3, thereby exhibiting excellent oxygen reduction activity.

### [Method for producing catalyst particles according to the present embodiment]

The ionic liquid-impregnated inorganic material-coated catalyst particles can be produced in the following manner.

First, a conductive carrier that supports metal particles of Pt etc. is prepared. The conductive carrier preferably has high graphite crystallinity. Such a metal particle-supported conductive carrier is commercially available.

Next, the conductive carrier supporting the metal particles is impregnated with an ionic liquid. Specifically, the carrier may be simply impregnated with an ionic liquid solution, and then the solvent may be removed. The solvent may be, for example, acetonitrile. As a result, the ionic liquid adheres to the surface and interior of the conductive carrier as well as to the surface of the metal particles.

Subsequently, the metal particle-supported conductive carrier impregnated with the ionic liquid is coated with an inorganic material, such as silica. For coating, a sol-gel method using a raw material, such as TEOS, can be used.

The production method according to the present embodiment has the following advantages.

The surface of a conductive carrier supporting metal particles of Pt etc. has a negative potential, and it is difficult to directly coat the surface with silica using a sol-gel method or the like. Therefore, in a conventional method, before forming a silica film by a sol-gel method or the like, the surface of a conductive carrier supporting metal particles is treated with a surfactant to make the surface potential positive, and then coated with silica using a sol-gel method. However, in that case, after coating with silica, it is necessary to remove the surfactant by heating or the like in an oxidizing atmosphere. This heat treatment reduces the crystallinity of the conductive carrier, and the characteristics of the catalyst particles obtained are not satisfactory.

In contrast, in the production method of the present embodiment, a conductive carrier supporting metal particles of Pt etc. is impregnated with/attached to an ionic liquid, such as an imidazolium cation, and then coated with silica using a sol-gel method or the like. When such an ionic liquid is impregnated/attached, the surface potential of the conductive carrier supporting metal particles becomes positive, so that silica coating can be suitably performed, and there is no need for heat treatment after silica coating. Therefore, catalyst particles whose conductive carrier has high crystallinity can be obtained.

### [Examples]

The present invention will be described in more detail by way of examples; however, the present invention is not limited to the examples.

### [Example A]

### <Synthesis of Pt-supported carbon>

Pt-supported carbon was synthesized according to a known method and had a Pt loading of Pt/C = 70/30 (wt/wt), and the carbon carrier used had a G-band/D-band ratio of 1.0 or more as determined by Raman spectroscopy.

### <Synthesis of silica-coated Pt-supported carbon>

Water was added to a dispersion solution obtained by adding the Pt-supported carbon to a tetradecyltrimethylammonium bromide (TTAB) aqueous solution, and then a combined solution of tetraethoxysilane (TEOS) and ethanol was added.

Next, sodium hydroxide was added to the combined solution, followed by stirring for 2 hours, and the treated Pt-supported carbon was separated by a centrifuge and dried at 80°C for 6 hours.

Finally, heat treatment was carried out at 350°C in air, and the attached TTAB was removed to obtain silica-coated Pt-supported carbon.

The pore volume in the mesopore region and the peak top pore diameter in the pore distribution curve of the Pt-supported carbon used in the synthesized silica-coated Pt-supported carbon were determined by the BJH method. Further, the crystallite size (1,1,1) of the Pt particles contained in the synthesized silica-coated Pt-supported carbon was determined by the XRD method.

### <Synthesis of ionic liquid-impregnated Pt-supported carbon>

The synthesized Pt-supported carbon was added to acetonitrile, and an ionic liquid in an amount equivalent to 80% of the mesopore volume of the Pt-supported carbon was added. After 30 minutes of ultrasonic dispersion, stirring was performed using a stirrer overnight, and acetonitrile was removed by an evaporator to obtain ionic liquid-impregnated Pt-supported carbon. The amount of the ionic liquid added was equivalent to 80 vol% of the mesopore volume of the Pt-supported carbon from 2 nm to 100 nm by a nitrogen adsorption BET multipoint method. 1-butyl-3-methylimidazolium bis(trifluoromethanesulfonyl)imide was used as the ionic liquid.

### <Synthesis of ionic liquid-impregnated silica-coated Pt-supported carbon>

The synthesized Pt-supported carbon was added to acetonitrile, and an ionic liquid in an amount equivalent to 80% of the mesopore volume of the Pt-supported carbon was added. After 30 minutes of ultrasonic dispersion, stirring was performed using a stirrer overnight, and acetonitrile was removed by an evaporator to obtain ionic liquid-impregnated Pt-supported carbon. The amount of the ionic liquid added was equivalent to 80 vol% of the mesopore volume of the Pt-supported carbon from 2 nm to 100 nm by a nitrogen adsorption BET multipoint method. 1-butyl-3-methylimidazolium bis(trifluoromethanesulfonyl)imide was used as the ionic liquid.

Next, water was added to the ionic liquid-impregnated Pt-supported carbon, followed by ultrasonic stirring, and a combined solution containing tetraethoxysilane (TEOS) and ethanol was added. Thereafter, sodium hydroxide was added, followed by stirring for 2 hours, and then the treated ionic liquid-impregnated Pt-supported carbon was separated by a centrifuge.

Finally, drying was performed at 80°C for 6 hours to obtain ionic liquid-impregnated silica-coated Pt-supported carbon.

The pore volume in the mesopore region and the peak top pore diameter in the pore distribution curve of the Pt-supported carbon used in the synthesized ionic liquid-impregnated silica-coated Pt-supported carbon were determined by the BJH method.

Further, the crystallite size (1,1,1) of the Pt particles contained in the synthesized ionic liquid-impregnated silica-coated Pt-supported carbon was determined by the XRD method.

### (Example A1)

The ionic liquid-impregnated silica-coated Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in Development ofTechnology to Promote the Practical Application of Macromolecule Electrolyte Fuel Cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO). The IV characteristics were evaluated again after the durability test.

### (Example A2)

The ionic liquid-impregnated silica-coated Pt-supported carbon, ionomer, and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 2.2, a mesopore volume of 0.19 cm³/g, and a peak top pore diameter of 2.7 nm. The silica used was tetraethoxysilane (TEOS). The crystallite size (1,1,1) of platinum particles was 5.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO. The IV characteristics were evaluated again after the durability test.

### (Example A3)

The ionic liquid-impregnated silica-coated Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. For the formation of silica, triethoxymethylsilane (TEMS) was used. The crystallite size (1,1,1) of platinum particles was 6.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO. The IV characteristics were evaluated again after the durability test.

### (Comparative Example A1)

The ionic liquid-impregnated silica-coated Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.0, a mesopore volume of 0.20 cm³/g, and a peak top pore diameter of 2.7 nm. The silica used was tetraethoxysilane (TEOS). The crystallite size (1,1,1) of platinum particles was 13.8 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO. The IV characteristics were evaluated again after the durability test.

### (Comparative Example A2)

The ionic liquid-impregnated silica-coated Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 2.3, a mesopore volume of 0.15 cm³/g, and a peak top pore diameter of 2.0 nm. The silica used was tetraethoxysilane (TEOS). The crystallite size (1,1,1) of platinum particles was 6.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO. The IV characteristics were evaluated again after the durability test.

### (Comparative Example A3: Not coated with silica)

The ionic liquid-impregnated Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm. The crystallite size (1,1,1) of platinum particles was 6.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO.

The IV characteristics were evaluated again after the durability test.

### (Comparative Example A4: Not impregnated with ionic liquid)

The silica-coated Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the silica-coated Pt-supported carbon had a G/D ratio of 1.0, a mesopore volume of 0.19 cm³/g, and a peak top pore diameter of 2.7 nm. The silica used was tetraethoxysilane (TEOS). The crystallite size (1,1,1) of platinum particles was 13.8 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO. The IV characteristics were evaluated again after the durability test.

### (Comparative Example A5: Not impregnated with ionic liquid and not coated with silica)

The Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the Pt-supported carbon had a G/D ratio of 1.6, a mesopore volume of 0.19 cm³/g, and a peak top pore diameter of 2.7 nm. The crystallite size (1,1,1) of platinum particles was 6.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and GDL were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.
As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of NEDO.
The IV characteristics were evaluated again after the durability test.

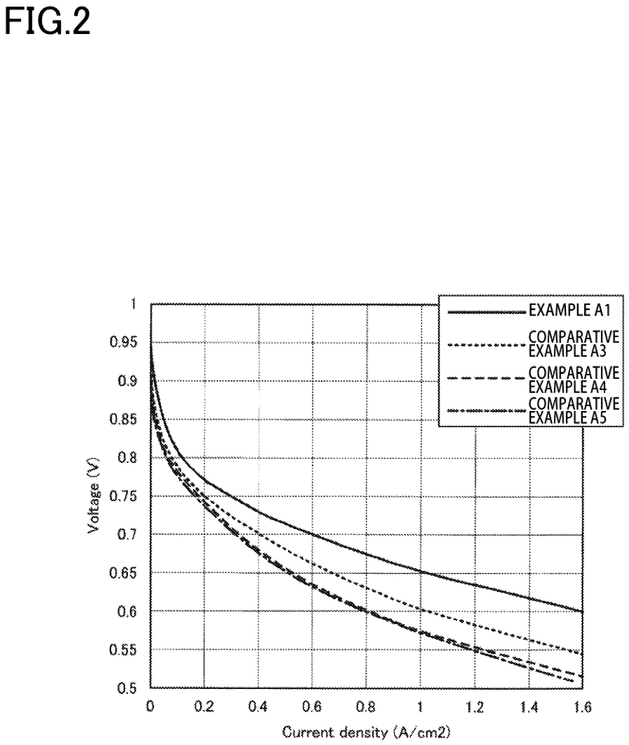

Fig. 2 shows the IV curves of the ionic liquid-impregnated silica-coated Pt-supported carbon, ionic liquid-impregnated Pt-supported carbon, silica-coated Pt-supported carbon, and Pt-supported carbon obtained in the above manner.

The ionic liquid-impregnated silica-coated Pt-supported carbon (Example A1) showed high voltage in both low and high load regions. The silica-coated Pt-supported carbon (Comparative Example A4) showed high voltage in the low load region, but showed low voltage in the high load region. The ionic liquid-impregnated Pt-supported carbon (Comparative Example A3) showed higher voltage in the low load region than the silica-coated Pt-supported carbon (Comparative Example A4), but showed higher voltage in both low and high load regions than Pt-supported carbon (Comparative Example A5).

**[Table 1]**

| | | Conductive carrier | | | Platinum particles | Silica source | Before durability test | After durability test |
|---|---|---|---|---|---|---|---|---|
| | | G/D ratio | Mesopore volume (cm³/g) | Peak top pore diameter (nm) | Crystallite size (1,1,1) (nm) | | Voltage (V) | Voltage (V) |
| Example A1 | Ionic liquid-impregnated silica-coated Pt-supported carbon | 1.6 | 0.19 | 2.7 | 6.4 | TEOS | 0.609 | 0.487 |
| Example A2 | Ionic liquid-impregnated silica-coated Pt-supported carbon | 2.2 | 0.19 | 2.7 | 5.4 | TEOS | 0.610 | 0.488 |
| Example A3 | Ionic liquid-impregnated silica-coated Pt-supported carbon | 1.6 | 0.19 | 2.7 | 6.4 | TEOS | 0.600 | 0.480 |
| Comparative Example A1 | Ionic liquid-impregnated silica-coated Pt-supported carbon | 1.0 | 0.20 | 2.7 | 13.8 | TEOS | 0.560 | 0.344 |
| Comparative Example A2 | Ionic liquid-impregnated silica-coated Pt-supported carbon | 2.3 | 0.15 | 2.0 | 6.4 | TEOS | 0.540 | 0.375 |
| Comparative Example A3 | Ionic liquid-impregnated Pt-supported carbon | 1.6 | 0.19 | 2.7 | 6.4 | None | 0.554 | 0.362 |
| Comparative Example A4 | Silica-coated Pt-supported carbon | 1.0 | 0.19 | 2.7 | 13.8 | TEOS | 0.526 | 0.365 |
| Comparative Example A5 | Pt-supported carbon | 1.6 | 0.19 | 2.7 | 6.4 | None | 0.515 | 0.397 |

Table 1 shows the voltage at 1.5 A/cm² in the results of I-V measurement before and after the durability test. In the present examples, if the voltage before the durability test was 0.570 V or more, it was regarded that a high voltage was obtained, and this case was regarded as passed. In addition, if the voltage after the durability test was 0.400 V or more, it was regarded that high voltage was maintained (excellent durability), and this case was regarded as passed.

When comparing Example A1 and Comparative Example A1, if the G/D ratio of the conductive carrier was low, the voltage was reduced significantly after the durability test. From this, it is considered that when the crystallinity of the carbon carrier, which formed the ionic liquid-impregnated silica-coated Pt-supported carbon, was low, the carbon carrier was consumed, the ionic liquid leaked (leaked out), and the voltage was reduced significantly after the durability test.

Moreover, the voltage was reduced more significantly after the durability test in Comparative Example A3 than in Example A1. This implies that because the ionic liquid-impregnated Pt-supported carbon had no silica coating (there was no inorganic material that encapsulated (coated) the Pt particles), the ionic liquid leaked (leaked out) and the voltage was reduced significantly after the durability test.

In Comparative Example A2, the crystallinity of the carbon carrier was high; however, it is considered that the voltage was low because the carbon carrier had few mesopores and could not retain the ionic liquid stably.

Comparative Example A4 was silica-coated Pt-supported carbon after surface-treatment with a surfactant and pyrolysis process of the surfactant after coating with silica, and it is considered that the conductive carrier had a low G/D ratio, high ionic resistance, and low voltage.

In Comparative Example A5, Pt-supported carbon was measured as a reference for the ionic liquid-impregnated silica-coated Pt-supported carbon.

### [Example B]

### <Synthesis of Pt-supported carbon>

Pt-supported carbon was synthesized according to a known method and had a Pt loading of Pt/C = 70/30 (wt/wt), and the carbon carrier used had a G-band/D-band ratio of 1.0 or more as determined by Raman spectroscopy.

### <Synthesis of ionic liquid-impregnated Pt-supported carbon>

The synthesized Pt-supported carbon was added to acetonitrile, and an ionic liquid in a predetermined amount of the mesopore volume of the Pt-supported carbon was added. After 30 minutes of ultrasonic dispersion, stirring was performed using a stirrer overnight, and acetonitrile was removed by an evaporator to obtain ionic liquid-impregnated Pt-supported carbon. The amount of the ionic liquid added was equivalent to 80 vol% of the mesopore volume of the Pt-supported carbon from 2 nm to 90 nm by a low-temperature nitrogen adsorption method or a nitrogen adsorption BET multipoint method.

### <Synthesis of ionic liquid-impregnated silica-coated Pt-supported carbon>

Water was added to the synthesized ionic liquid-impregnated Pt-supported carbon, followed by ultrasonic stirring, and then sodium hydroxide was added. Subsequently, a combined solution containing tetraethoxysilane (TEOS) and ethanol was added. After stirring for 2 hours, the treated ionic liquid-impregnated Pt-supported carbon was separated by a centrifuge.

Finally, drying was performed at 80°C for 6 hours to obtain ionic liquid-impregnated silica-coated Pt-supported carbon.

The pore volume in the mesopore region and the peak top pore diameter in the pore distribution curve in the carbon carrier contained in the Pt-supported carbon used in the synthesized ionic liquid-impregnated silica-coated Pt-supported carbon were determined by the BJH method.

Further, the crystallite size (1,1,1) of the Pt particles contained in the synthesized ionic liquid-impregnated silica-coated Pt-supported carbon was determined by the XRD method.

In addition, the amount of silica contained in the synthesized ionic liquid-impregnated silica-coated Pt-supported carbon was calculated from the amount of Si element determined by XRF.

### (Example B1)

According to <Synthesis of ionic liquid-impregnated silica-coated Pt-supported carbon>, ionic liquid-impregnated silica-coated Pt-supported carbon was synthesized using 1-ethyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO). The IV characteristics were evaluated again after the durability test.

### (Example B2)

According to <Synthesis of ionic liquid-impregnated silica-coated Pt-supported carbon>, ionic liquid-impregnated silica-coated Pt-supported carbon was synthesized using 1-butyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO). The IV characteristics were evaluated again after the durability test.

### (Example B3)

According to <Synthesis of ionic liquid-impregnated silica-coated Pt-supported carbon>, ionic liquid-impregnated silica-coated Pt-supported carbon was synthesized using 1-hexyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO). The IV characteristics were evaluated again after the durability test.

### (Example B4)

According to <Synthesis of ionic liquid-impregnated silica-coated Pt-supported carbon>, ionic liquid-impregnated silica-coated Pt-supported carbon was synthesized using 1-butyl-3-methylimidazolium bis(trifluoromethanesulfonyl)imide as an ionic liquid. The amount of the ionic liquid impregnated was equivalent to 50 vol% of the mesopore volume of the Pt-supported carbon.

Ionic liquid-impregnated silica-coated Pt-supported carbon using 1-butyl-3-methylimidazolium bis(trifluoromethanesulfonyl)imide as an ionic liquid, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO). The IV characteristics were evaluated again after the durability test.

### (Example B5)

According to <Synthesis of ionic liquid-impregnated silica-coated Pt-supported carbon>, ionic liquid-impregnated silica-coated Pt-supported carbon was synthesized using 1-butyl-3-methylimidazolium bis(trifluoromethanesulfonyl)imide as an ionic liquid. The amount of the ionic liquid impregnated was equivalent to 90 vol% of the mesopore volume of the Pt-supported carbon.

Ionic liquid-impregnated silica-coated Pt-supported carbon using 1-butyl-3-methylimidazolium bis(trifluoromethanesulfonyl)imide as an ionic liquid, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Example B6)

According to <Synthesis of ionic liquid-impregnated silica-coated Pt-supported carbon>, ionic liquid-impregnated silica-coated Pt-supported carbon was synthesized using 1-octyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Example B7)

According to <Synthesis of ionic liquid-impregnated silica-coated Pt-supported carbon>, ionic liquid-impregnated silica-coated Pt-supported carbon was synthesized using 1-decyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Example B8)

According to <Synthesis of ionic liquid-impregnated silica-coated Pt-supported carbon>, ionic liquid-impregnated silica-coated Pt-supported carbon was synthesized using 1-butyl-3-methylimidazolium bis(trifluoromethanesulfonyl)imide as an ionic liquid. The amount of the ionic liquid impregnated was equivalent to 40 vol% of the mesopore volume of the Pt-supported carbon.

Ionic liquid-impregnated silica-coated Pt-supported carbon using 1-butyl-3-methylimidazolium bis(trifluoromethanesulfonyl)imide as an ionic liquid, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Example B9)

According to <Synthesis of ionic liquid-impregnated silica-coated Pt-supported carbon>, ionic liquid-impregnated silica-coated Pt-supported carbon was synthesized using 1-butyl-3-methylimidazolium bis(trifluoromethanesulfonyl)imide as an ionic liquid. The amount of the ionic liquid impregnated was equivalent to 20 vol% of the mesopore volume of the Pt-supported carbon.

Ionic liquid-impregnated silica-coated Pt-supported carbon using 1-butyl-3-methylimidazolium bis(trifluoromethanesulfonyl)imide as an ionic liquid, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Example B10)

According to <Synthesis of ionic liquid-impregnated silica-coated Pt-supported carbon>, ionic liquid-impregnated silica-coated Pt-supported carbon was synthesized using 1-butyl-3-methylimidazolium bis(trifluoromethanesulfonyl)imide as an ionic liquid. The amount of the ionic liquid impregnated was equivalent to 100 vol% of the mesopore volume of the Pt-supported carbon.

Ionic liquid-impregnated silica-coated Pt-supported carbon using 1-butyl-3-methylimidazolium bis(trifluoromethanesulfonyl)imide as an ionic liquid, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated silica-coated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Comparative Example B6)

According to <Synthesis of ionic liquid-impregnated Pt-supported carbon>, ionic liquid-impregnated Pt-supported carbon was synthesized using 1-ethyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated Pt-supported carbon, ionomer, and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by Solvay), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 9,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Comparative Example B7)

According to <Synthesis of ionic liquid-impregnated Pt-supported carbon>, ionic liquid-impregnated Pt-supported carbon was synthesized using 1-butyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Comparative Example B8)

According to <Synthesis of ionic liquid-impregnated Pt-supported carbon>, ionic liquid-impregnated Pt-supported carbon was synthesized using 1-hexyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Comparative Example B9)

According to <Synthesis of ionic liquid-impregnated Pt-supported carbon>, ionic liquid-impregnated Pt-supported carbon was synthesized using 1-octyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm.
For silica, tetraethoxysilane (TEOS) was used. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Comparative Example B10)

According to <Synthesis of ionic liquid-impregnated Pt-supported carbon>, ionic liquid-impregnated Pt-supported carbon was synthesized using 1-decyl-3-methylimidazolium bis(trifluoromethanesulfonyl)imide as an ionic liquid. The amount of the ionic liquid impregnated was equivalent to 80 vol% of the mesopore volume of the Pt-supported carbon.

The ionic liquid-impregnated silica-coated Pt-supported carbon, ionomer (produced by Solvay), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by 3M), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 10,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

### (Comparative Example B11)

The Pt-supported carbon, ionomer (produced by Asahi Kasei Corporation), and fibers were added to a combined solution containing water, IPA, and ethanol, and the resulting mixture was applied to an electrolyte membrane so that the amount of platinum was 0.44 mg/cm², thereby obtaining a cathode-side catalyst layer. The carbon used for the ionic liquid-impregnated Pt-supported carbon had a G/D ratio of 1.6, a mesopore volume of 0.19 cm³/g, and a peak top pore diameter of 2.7 nm. The silica used was tetraethoxysilane (TEOS). The crystallite size (1,1,1) of platinum particles was 6.4 nm.

Subsequently, the Pt-supported carbon, ionomer (produced by Asahi Kasei Corporation), and fibers were added to a combined solution containing water and IPA, and the resulting mixture was applied to the electrolyte membrane on the opposite side of the cathode-side catalyst layer so that the amount of platinum was 0.1 mg/cm², thereby obtaining an anode-side catalyst layer.

A membrane electrode assembly, a gasket, and a gas diffusion layer (GDL) were each incorporated into a JARI standard cell, and IV characteristics were evaluated under the power generation conditions described in the Development of technology to promote the practical application of macromolecule electrolyte fuel cells, Development of fundamental technology "Common fundamental technology for cell evaluation analysis" of NEDO.

As a durability test, 9,000 cycles of start/stop and 30,000 cycles of load response were performed as described in the Development of technology to promote the practical application of macromolecule electrolyte fuel cells, Development of fundamental technology "Common fundamental technology for cell evaluation analysis" of the New Energy and Industrial Technology Development Organization (NEDO).

The IV characteristics were evaluated again after the durability test.

Table 2 shows the voltage at 1.5 A/cm² in the results of I-V measurement before and after the durability test. Examples B1 to B3 and Examples B6 and B7 show the results of MEA using an ionic liquid-impregnated silica-coated catalyst, and the result of examining the alkyl moiety of the ionic liquid. All cases showed good results with a voltage before the durability test of 0.400 V or more and a voltage after the durability test of 0.400 V or more. In particular, when the alkyl moiety was ethyl, butyl, or hexyl, the initial voltage was 0.560 V or more. In the case of octyl or decyl, the initial voltage was slightly lower, but was 0.450 V or more. The durability was also about the same, i.e., 0.420 to 0.440 V, regardless of the alkyl moiety.

**[Table 2]**

| Table 2 | | Ionic liquid (alkyl moiety) | Amount of ionic liquid impregnated (vol%) | Conductive carrier | | | Platinum particles | Silica source | Before durability test | After durability test |
|---|---|---|---|---|---|---|---|---|---|---|
| | | | | G/D ratio | Mesopore volume (cm³/g) | Peak top pore diameter (nm) | Crystallite size (1,1,1) (nm) | | Voltage (V) | Voltage (V) |
| Example B1 | Ionic liquid-impregnated silica-coated Pt-supported carbon | Ethyl | 80 | 1.6 | 0.19 | 2.7 | 6.4 | TEOS | 0.596 | 0.426 |
| Example B2 | Ionic liquid-impregnated silica-coated Pt-supported carbon | Butyl | 80 | 1.6 | 0.19 | 2.7 | 6.4 | TEOS | 0.583 | 0.429 |
| Example B3 | Ionic liquid-impregnated silica-coated Pt-supported carbon | Hexyl | 80 | 1.6 | 0.19 | 2.7 | 6.4 | TEOS | 0.563 | 0.435 |
| Example B4 | Ionic liquid-impregnated silica-coated Pt-supported carbon | Butyl | 50 | 1.6 | 0.19 | 2.7 | 6.4 | TEOS | 0.585 | 0.423 |
| Example B5 | Ionic liquid-impregnated silica-coated Pt-supported carbon | Butyl | 90 | 1.6 | 0.19 | 2.7 | 6.4 | TEOS | 0.581 | 0.428 |
| Example B6 | Ionic liquid-impregnated silica-coated Pt-supported carbon | Octyl | 80 | 1.6 | 0.19 | 2.7 | 6.4 | TEOS | 0.492 | 0.421 |
| Example B7 | Ionic liquid-impregnated silica-coated Pt-supported carbon | Decyl | 80 | 1.6 | 0.19 | 2.7 | 6.4 | TEOS | 0.461 | 0.423 |
| Example B8 | Ionic liquid-impregnated silica-coated Pt-supported carbon | Butyl | 40 | 1.6 | 0.19 | 2.7 | 6.4 | TEOS | 0.551 | 0.412 |
| Example B9 | Ionic liquid-impregnated silica-coated Pt-supported carbon | Butyl | 20 | 1.6 | 0.19 | 2.7 | 6.4 | TEOS | 0.530 | 0.401 |
| Example B10 | Ionic liquid-impregnated silica-coated Pt-supported carbon | Butyl | 100 | 1.6 | 0.19 | 2.7 | 6.4 | TEOS | 0.562 | 0.410 |
| Comparative Example B6 | Ionic liquid-impregnated Pt-supported carbon | Ethyl | 80 | 1.6 | 0.19 | 2.7 | 6.4 | TEOS | 0.552 | 0.342 |
| Comparative Example B7 | Ionic liquid-impregnated Pt-supported carbon | Butyl | 80 | 1.6 | 0.19 | 2.7 | 6.4 | TEOS | 0.554 | 0.362 |
| Comparative Example B8 | Ionic liquid-impregnated Pt-supported carbon | Hexyl | 80 | 1.6 | 0.19 | 2.7 | 6.4 | TEOS | 0.483 | 0.383 |
| Comparative Example B9 | Ionic liquid-impregnated Pt-supported carbon | Octyl | 80 | 1.6 | 0.19 | 2.7 | 6.4 | TEOS | 0.463 | 0.380 |
| Comparative Example B10 | Ionic liquid-impregnated Pt-supported carbon | Decyl | 80 | 1.6 | 0.19 | 2.7 | 6.4 | TEOS | 0.435 | 0.381 |
| Comparative Example B11 | Pt-supported carbon | - | - | 1.6 | 0.19 | 2.7 | 6.4 | - | 0.515 | 0.397 |

On the other hand, Comparative Examples B6 to B10 showed the results of MEA using an ionic liquid-impregnated catalyst not coated with silica. Unlike the MEA using an ionic liquid-impregnated silica-coated catalyst, ethyl and butyl showed an initial voltage of 0.550 V to 0.560 V; however, the voltage was reduced significantly from hexyl, and was 0.483 V for hexyl, 0.463 V for octyl, and 0.435 V for decyl. In the MEA using an ionic liquid-impregnated catalyst not coated with silica, the voltage was lower for all alkyls compared to the MEA using an ionic liquid-impregnated silica-coated catalyst. Although the details are still under consideration, it has been found that silica slightly improved the Pt-Pt bond energy, which is an additional result of the improvement in catalytic activity caused by silica.

Further, Fig. 3 shows the results of the electrochemical surface area (ECSA) of Pt. In Fig. 3, ethyl, butyl, hexyl, octyl, and decyl of the ionic liquid-impregnated silica-coated catalyst particles correspond, respectively, to Examples B1, B2, B3, B6, and B7. Ethyl, butyl, hexyl, octyl, and decyl of the ionic liquid-impregnated particles in the figure correspond, respectively, to Comparative Example B6, B7, B8, B9, and B10. ECSA was normalized and displayed using the ECSA value of the MEA using the Pt-supported carbon of Comparative Example B11 as 1. As the carbon chain of the alkyl moiety becomes longer, ECSA tends to become smaller; however, in the ionic liquid-impregnated silica-coated catalyst, the decrease in ECSA was suppressed compared to the ionic liquid-impregnated catalyst, and it had the effect of suppressing the decrease in ECSA from at least ethyl to decyl. Among these, ethyl, butyl, and hexyl showed particularly high ECSA values of 0.8 or higher. This indicates that silica suppresses the active site adsorption of Pt by the ionic liquid.

Moreover, as shown in Table 2, in durability, the MEA using an ionic liquid-impregnated silica-coated catalyst showed higher voltage after durability than the MEA using an ionic liquid catalyst, and higher voltage than the MEA using the Pt-supported carbon of Comparative Example B11. This is considered to be because silica was able to retain the ionic liquid stably even after the durability test.

Examples B2, B4, B5, B8, B9, and B10 show the results of fixing 1-butyl-3-methylimidazolium bis(trifluoromethanesulfonyl)imide as the ionic liquid in the ionic liquid-impregnated silica-coated catalyst, and examining the amount of the ionic liquid impregnated within the range of 20 to 100 vol%. When the amount of impregnation was 20, 40, 50, 80, 90, and 100 vol%, the initial voltage was 0.530 V, 0.551 V, 0.585 V, 0.583 V, 0.581 V, and 0.562 V, respectively. The voltage after durability was 0.401 V, 0.412 V, 0.423 V, 0.429 V, 0, 428 V, and 0.410 V. These results revealed that as the amount of impregnation was increased, the voltage increased and reached saturation in the range of 50 to 90 vol%, and that the voltage decreased when the amount of impregnation was increased to 100 vol%. The decrease in voltage at 100 vol% is considered to be because the retention of the ionic liquid is at its limit, some of the ionic liquid flows out in the liquid preparation process or during power generation, the proton conductivity decreases due to adhesion to the ionomer and electrolyte membrane, and furthermore, the pores of the catalyst layer are blocked which causes an increase in concentration overvoltage.

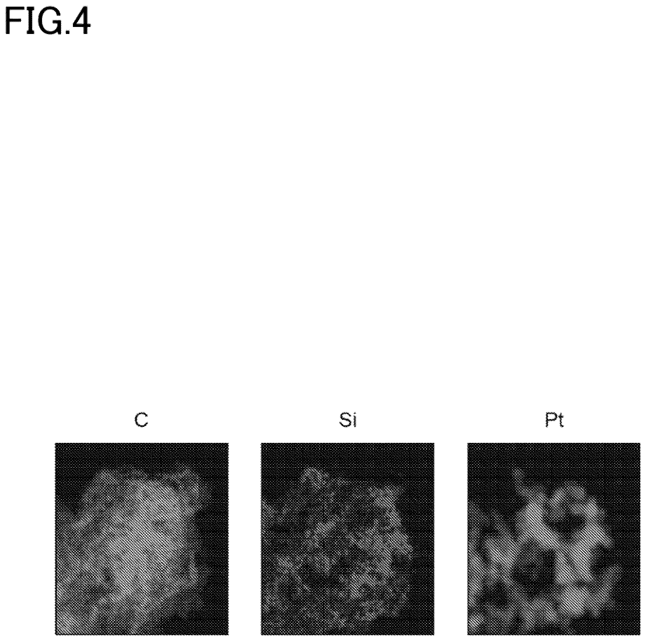

Fig. 4 shows TEM-EDS images of the ionic liquid-impregnated silica-coated catalyst of Example B2. It can be found that silica preferentially encapsulates (coats) the Pt surface. From this, it is expected that the ionic liquid will be retained on the Pt surface by silica.

Table 3 shows the results measured by EC-XPS regarding how Pt affects the surface structure under oxidation potential in the ionic liquid-impregnated silica-coated catalyst. The effects of the present invention were verified by comparing Example B2 with Comparative Example B11. The EC-XPS measurement was carried out in such a manner that the ionic liquid-impregnated silica-coated catalyst of Example B2 and the Pt-supported carbon of Comparative Example B11 were placed on an electrode and soaked in an electrolyte 0.1 M perchloric acid aqueous solution, and after Ar bubbling, pretreatment by CV (50 cycles at a sweep rate of 50 mV/s in the range of -0.2 V to 1.2 V vs. Ag/AgCl) was performed, then the electrodes held at each measurement potential of 0.2 V, 0.45 V, 0.65 V, 1 .0 V, and 1.1 V vs. Ag/AgCl were immediately transferred to a vacuum, and XPS measurements were performed. Compared to Comparative Example B11, in Example B2, the oxidation of Pt was suppressed even when the oxidation potential was increased, revealing that the active sites of Pt were maintained. From this, the higher voltage at the initial stage and after the durability test in Example B2 than in Comparative Example B11 suggests that there are more Pt active sites at the initial stage and after the durability test.

**[Table 3]**

| Example B2 | | | | Comparative Example B11 | | | |
|---|---|---|---|---|---|---|---|
| Potential (V) vs Ag/AgCl | Pt | OHad | PtO | Potential (V) vs Ag/AgCl | Pt | OHad | PtO |
| 0.20 | 100% | - | - | 0.20 | 100% | - | - |
| 0.45 | 100% | - | - | 0.45 | 100% | - | - |
| 0.65 | 100% | - | - | 0.65 | 91% | 9% | - |
| 1.00 | 82% | 16% | 2% | 1.00 | 71% | 23% | 6% |
| 1.10 | 73% | 22% | 5% | 1.10 | 64% | 24% | 12% |

### [Industrial Applicability]

The fuel cell electrode materials according to the present invention are used as electrodes for power supplies for various portable electronic devices, power supplies for automobiles etc., or power supplies for household appliances.

### [Reference Signs List]

- 1: Ionic liquid-impregnated inorganic material-coated catalyst particles
- 2: Conductive carrier
- 3: Metal particles
- 4: Inorganic material
- 5: Ionic liquid

## Claims

1. Ionic liquid-impregnated inorganic material-coated catalyst particles comprising catalyst particles each comprising a conductive carrier and metal particles supported on the conductive carrier, wherein
part of the surface of the metal particles is coated with an inorganic material, at least part of the remaining surface of the metal particles coated with the inorganic material is in contact with an ionic liquid, and at least one of the following A and B is satisfied:
Requirement A: the conductive carrier is carbon, and the peak intensity ratio of G-band and D-band (G/D ratio) determined by Raman spectroscopy is 1.6 or more and 2.2 or less at a laser wavelength of 532 nm; and
Requirement B: the conductive carrier has a pore volume in a mesopore region of 0.18 cm³/g or more as determined by a BJH method, and a peak top pore diameter in a pore distribution curve within the range of 2.6 nm or more and 2.8 nm or less as determined by a BJH method.

2. The ionic liquid-impregnated inorganic material-coated catalyst particles according to claim 1, wherein the metal particles are platinum particles and have a crystallite size (1,1,1) of 8 nm or less as measured by an XRD method.

3. The ionic liquid-impregnated inorganic material-coated catalyst particles according to claim 1 or 2, wherein the inorganic material is silica.

4. The ionic liquid-impregnated inorganic material-coated catalyst particles according to any one of claims 1 to 3, wherein the ionic liquid comprises an imidazolium salt.

5. The ionic liquid-impregnated inorganic material-coated catalyst particles according to any one of claims 1 to 4, wherein the ionic liquid comprises 1-alkyl-3-methylimidazolium bis(trifluoromethanesulfonyl)imide.

6. The ionic liquid-impregnated inorganic material-coated catalyst particles according to any one of claims 1 to 5, wherein the ionic liquid comprises at least one selected from the group consisting of 1-butyl-3-methylimidazolium bis(trifluoromethanesulfonyl)imide, 1-hexyl-3-methylimidazolium bis(trifluoromethanesulfonyl)imide, and 1-ethyl-3-methylimidazolium bis(trifluoromethanesulfonyl)imide.

7. The ionic liquid-impregnated inorganic material-coated catalyst particles according to any one of claims 1 to 6, wherein the amount of the ionic liquid impregnated in the ionic liquid-impregnated inorganic material-coated catalyst particles is 50 vol% or more and 90 vol% or less of the mesopore volume of the catalyst particles.

8. A fuel cell membrane electrode assembly **characterized by** comprising a catalyst layer comprising the ionic liquid-impregnated inorganic material-coated catalyst particles according to any one of claims 1 to 7.

9. The fuel cell membrane electrode assembly according to claim 8, **characterized in that** the catalyst layer further comprises a fibrous material.

10. A fuel cell **characterized by** comprising the ionic liquid-impregnated inorganic material-coated catalyst particles according to any one of claims 1 to 7.
